(19) Europäisches Patentamt
European Patent Office
Office européen des brevets

(11) **EP 4 517 284 A1**

(12) **EUROPEAN PATENT APPLICATION**

(43) Date of publication:
**05.03.2025 Bulletin 2025/10**

(21) Application number: **24191425.8**

(22) Date of filing: **29.07.2024**

(51) International Patent Classification (IPC):
**G01K 3/14** (2006.01) **G01K 11/32** (2021.01)

(52) Cooperative Patent Classification (CPC):
**G01K 11/32; G01K 3/14;** G01K 2003/145

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **04.09.2023 IT 202300018108**

(71) Applicant: **Prysmian S.p.A.**
**20126 Milan (IT)**

(72) Inventors:
• **LI VIGNI, Vincenzo**
**90141 Palermo (PA) (IT)**
• **RIZZO, Giuseppe**
**90141 Palermo (PA) (IT)**

(74) Representative: **Praxi Intellectual Property Milano**
**Via Mario Pagano, 69/A**
**20145 Milano (IT)**

(54) **CABLE TERMINATION ANOMALY DETECTION METHOD AND SYSTEM**

(57) Cable termination anomaly detection method (200), comprising: placing at least a temperature sensor (2) near a cable termination (1) having a cooling/insulating fluid (7) so as to measure temperatures of a plurality of measuring points ($S_1$-$S_E$); measuring (201) by said temperature sensor (2) and at different measuring times a plurality of groups of temperature values ($TGt_1$-$TGt_M$). The method further comprises: acquiring the plurality of groups of temperature values ($TGt_1$-$TGt_M$) and constructing (203) an axial temperature distribution ($ATD(z_n)$) expressing a one-to-one correspondence between estimated temperature values obtained from the plurality of groups of temperature values ($TGt_1$-$TGt_M$) and height values along a longitudinal axis (A1) of the cable termination.

**FIG. 4**

**Description**

BACKGROUND

Technical field

The present disclosure relates to techniques for detecting anomalies in cable terminations such as an example, High Voltage and Medium Voltage terminations.

Description of the Related Art

High Voltage (HV) terminations comprising an outer sheath (made in fiberglass or other insulating materials) are known. HV terminations are a critical part of electrical systems. Terminations may be affected by different issues, such as Partial Discharges on the stress cone or bad contact between different metal components, that may result in critical failure of the component, safety threats to people and objects and extended economic losses.

A typical asset monitoring strategy is the adoption of Partial Discharge monitoring for assessing the quality of the insulating parts. Another well-established method for characterizing the working condition of HV terminations is thermal imaging, for the detection of abnormal hot spots.

According to another approach, temperature monitoring of HV terminations is performed by using thermal cameras. These measurements are usually performed by operators on a spot basis.

The Applicant observes that measurement results performed by means of infrared cameras may be affected by external phenomena, not related to the actual temperature distribution of the object under test. For this reason, the operator may be warned in vain by not reliable measurements.

Document US20110153232 describes a gas pressure monitoring system that monitors a leak of gas enclosed in a gas-insulated electric apparatus such as a gas-insulated switchgear.

Document "Integral sensing of HV cable joints - Monitor operation and predict failures early", 10th International Conference on Insulated Power Cables, 2019. The paper discusses the life pilot installation of three joints equipped with Distributed Acoustic Sensing and Distributed Temperature Sensing.

BRIEF SUMMARY OF THE DISCLOSURE

The Applicant has noticed that the techniques of the prior art for detecting anomalies in cable terminations are not sufficiently reliable.

The Applicant has found that a method alternative to the known ones and showing satisfying performances can be based on the measure and analysis of a distribution of temperature constructed from temperature measures acquired along the height of the cable termination.

According to a first aspect, the present disclosure relates to a cable termination anomaly detection method comprising:

placing at least a temperature sensor near a cable termination having a cooling/insulating fluid so as to measure temperatures of a plurality of measuring points including points distributed at different heights in direction of a longitudinal axis of the cable termination;

measuring by said temperature sensor, at different measuring times and in a measuring time interval, a plurality of groups of temperature values, where each group represents temperatures assumed by the plurality of said measuring points in a corresponding measuring time;

acquiring the plurality of groups of temperature values and performing the following digital processing:

constructing an axial temperature distribution expressing a one-to-one correspondence between estimated temperature values obtained from the plurality of groups of temperature values and height values along the longitudinal axis;

performing an average so as each estimated temperature value of the axial temperature distribution is the result of a time average, over said measuring time interval, of temperatures obtained from said plurality of groups of temperature values;

computing least one index based on portions of the axial temperature distribution comprised between different height ranges;

comparing said at least one index with a respective threshold value) and detecting at least one of the following operating conditions of the cable termination: normal condition, bad bus-bar contact/hot spot top condition, bad cable-to-termination interface/hot spot bottom condition, leakage of cooling/insulating fluid condition.

In an embodiment, said time average is performed averaging over said measuring time interval the plurality of groups of temperature values obtaining a plurality of temperature average values; each temperature average value corresponding to a time average of temperatures measured in a measuring point; said axial temperature distribution is obtained implementing said least one construction method to the plurality of groups of temperature values obtaining a plurality of temperature average values. In another embodiment, the method comprises: constructing a plurality of further axial temperature distributions each associated to one group of the plurality of groups of temperature values by implementing said least one construction method; performing the time average, over said measuring time interval, of the plurality of further axial distributions obtaining said axial distribution.

In an embodiment, computing said least one index comprises: considering a portion of the axial temperature distribution assumed a in lower portion/upper portion of the termination in comparison with another portion of the the axial temperature distribution assumed in a middle portion of the termination.

In an embodiment, constructing an axial temperature distribution is performed according at least one of the following construction methods: ordering temperatures according increasing height values, curve fitting, selecting temperatures; performing spatial average of temperatures

In an embodiment, computing at least one index comprises at least one of the following selections and computations: selecting from the axial temperature distribution a first average temperature and a second average temperature associated to a first height value and second height value defining the upper portion; selecting from the axial temperature distribution a third average temperature and a fourth average temperature associated to third height value and fourth height value defining the lower portion; the second height value and the third height value defining the middle portion; computing a first index as a first ratio between a difference between the first average temperature and the second average temperature and a difference between the second average temperature and the third average temperature; computing a second index as a second ratio between a difference between the fourth average temperature and the third average temperature and a difference between the second average temperature and the third average temperature; computing a third index as a third ratio between a difference between the second average temperature and the first average temperature and a difference between the second average temperature and the third average temperature; wherein: the first index is indicative of the bad bus-bar contact /hot spot top condition; the second index is indicative of a bad cable-to-termination interface /hot spot bottom condition; the third index is indicative of leakage of said cooling/insulating fluid under a liquid form.

In an embodiment, comparing said at least one index with a respective threshold value comprises: defining a first threshold value and detecting the bad bus-bar/hot spot top condition when said first index is greater than the first threshold; defining a second threshold value and detecting the bad cable-to-termination interface/hot spot bottom condition when said second index is greater than the second threshold; defining a third threshold value and detecting the leakage of cooling/insulating fluid condition when said third index is greater than the third threshold, detecting the normal condition when none of the above conditions is detected.

In an embodiment, placing at least a temperature sensor comprises: providing at least one of the following sensors: optical fiber sensor, Distributed Optical Sensing System, thermal imaging sensor, infrared sensor; passive infrared sensor.

In an embodiment: said cable termination comprises an outer sheath surrounding the insulating/cooling fluid; placing at least a temperature sensor near the cable termination comprises: providing a Distributed Temperature Sensing system including an optical waveguide of one of the following typologies: optical fiber; dielectric waveguide; and performing one of the following operations: embedding said at least temperature sensor in the outer sheath of the cable termination; wrapping the optical waveguide around an internal layer of the outer sheath; wrapping the optical waveguide on an external surface of the outer sheath; wrapping by printing/depositing said optical waveguide on the internal layer of the outer sheath.

In an embodiment, wrapping the optical waveguide includes: forming coils separated by an axial spacing; an axial resolution of the distributed temperature sensor including the optical waveguide being dependent on said axial spacing.

In one embodiment, the method further includes: wrapping the optical waveguide forming a plurality of group of coils having different heights and comprising a first group of coils including coils with a first coil density and a second group of coils with a second coil density, different from the first coil density.

In an embodiment, the method further includes: defining different angular sectors of the outer sheath, each sector extending along said longitudinal axis of the cable termination; and wherein :wrapping the optical waveguide comprises forming a plurality of serpentines each in a separated angular sector; each serpentine of an angular sector being connected to another serpentine of another angular sector by an optical fiber segment.

According to a second aspect, the present disclosures relates to a cable termination anomaly detection system comprising:

- a cable termination comprising: an outer sheath extending according to a longitudinal axis and a cooling/insulating fluid housed in said outer sheath;
- at least a temperature sensor placed near a cable termination and configured to measure temperatures of a plurality of measuring points including points distributed at different heights in direction of a longitudinal axis of the cable termination;
- a processor connected to said at least one temperature sensor so as to acquire at different measuring times a plurality of groups of temperature values, where each group represents temperatures assumed by the plurality of said measuring points in a corresponding measuring time over a measuring time interval;

wherein said processor in configured to perform the following digital processing:

constructing an axial temperature distribution expressing a one-to-one correspondence between estimated temperature values obtained from the plurality of groups of temperature values and height values along the longitudinal axis;

performing an average so as each estimated temperature value of the axial temperature distribution is the result of a time average, over said measuring time interval, of temperatures obtained from said plurality of groups of temperature values;

computing at least one index based on portions of the axial temperature distribution comprised between different height ranges;

comparing said at least one index with a respective threshold value and detecting at least one of the following operating conditions of the cable termination: normal condition, bad bus-bar contact/hot spot top condition, bad cable-to-termination interface/hot spot bottom condition, leakage of cooling/insulating fluid condition.

According to a third aspect, the present disclosure relates to a cable termination monitoring system, comprising:

- a cable termination comprising an outer sheath extending according to a longitudinal axis and a cooling/insulating fluid housed in said outer sheath;
- a distributed temperature sensor comprising an optical waveguide and configured to measure temperatures of a plurality of measuring points distributed at different heights in direction of the longitudinal axis;
- wherein said optical waveguide is placed around an outer/inner layer of the outer sheath so as to form coils with an axial spacing; an axial resolution of the distributed temperature sensor depending on said axial spacing.

In an embodiment, the optical waveguide forms a plurality of group of coils having different heights and comprising a first group of coils with a first coil density and a second group of coils with a second coil density, different from the first coil density.

In an embodiment: the optical waveguide is placed so as to form a plurality of serpentines each serpentine lying in a separated angular sector of the outer sheath; each angular sector extending along said longitudinal axis of the cable termination.

In an embodiment, the cable termination monitoring system further includes: a processor connected to said at least one temperature sensor so as to acquire at different measuring times a plurality of groups of temperature values, where each group represents temperatures assumed by the plurality of cable termination points in a corresponding measuring time.

In an embodiment, the cable termination monitoring system further includes: at least one of the following further sensors configured to provide measured data to said processor: wind sensor; solar sensor.

In an embodiment, said cooling/insulating fluid is one of the following fluids: gaseous fluid; liquid fluid.

BRIEF DESCRIPTION OF THE DRAWINGS

Further characteristics and advantages will be more apparent from the following description of the various embodiments given as a way of an example with reference to the enclosed drawings in which:

FIG. 1 schematically shows an example of a monitoring system comprising a High Voltage termination, a temperature sensor device and a processor 3;

FIG. 2 shows an example of HV termination comprising an outer sheath;

FIG. 3 shows a detail of the HV termination of FIG. 2 showing section of an optical fiber wound around a longitudinal axis and embedded in the outer sheath of said termination;

FIG. 4 shows by a flow chart some steps of an anomaly detection method;

FIG. 5 shows an example of an axial temperature distribution ATD(z) over the HV termination having a liquid cooling/insulating fluid, in condition of hot spot at the top.

FIG. 6 shows an example of the axial temperature distribution over the HV termination having a gaseous cooling/insulating fluid, in condition of hot spot at the top.

FIG. 7 shows an example of the axial temperature distribution over the HV termination having a liquid cooling/insulating fluid, in condition of hot spot at the bottom.

FIG. 8 shows an example of the axial temperature distribution over the HV termination having a gaseous cooling/insulating fluid, in condition of hot spot at the bottom;

FIG. 9 shows an example of the axial temperature distribution over the HV termination having a liquid cooling/insulating fluid, in a liquid leakage condition;

FIG. 10 shows an example of the axial temperature distribution over the HV termination having a liquid cooling/insulating fluid and operating in normal conditions;

FIG. 11 shows an example of the axial temperature distribution over the HV termination having a gaseous cooling/insulating fluid and operating in normal conditions;

FIG. 12 refers to an embodiment in which an optical waveguide made by an optical fiber is helically wrapped around the longitudinal axis of the HV termination with a constant axial spacing;

FIG. 13 refers to an embodiment in which the optical fiber is wrapped around the longitudinal axis of the HV termination forming serpentines is different angular sectors;

FIG. 14 refers to an embodiment in which the optical fiber is wrapped around the longitudinal axis of the HV termination forming serpentines in different angular sectors with a variable axial spacing.

FIG. 15 refers to a "plug-in" type HV termination which can be affected by bad connection at a bottom portion.

DETAILED DESCRIPTION

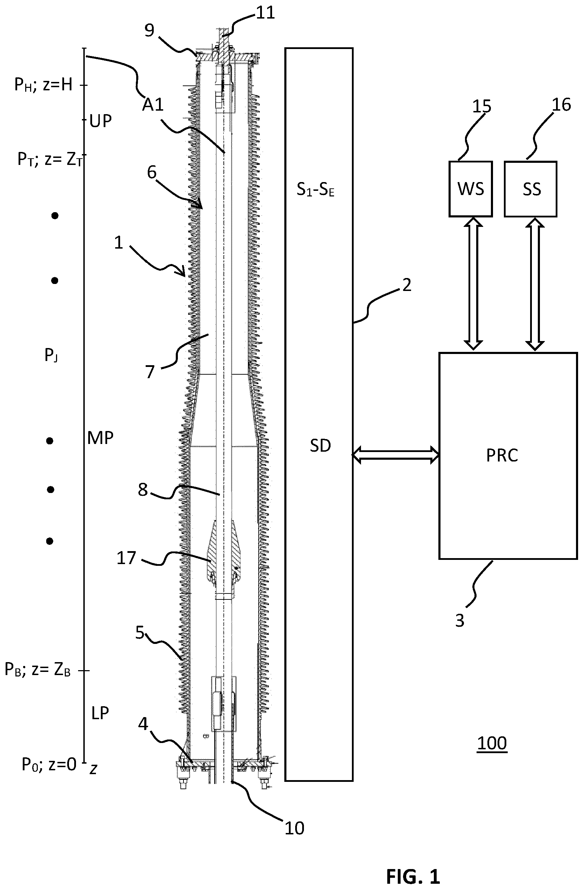

FIG. 1 schematically shows an example of a monitoring system 100 comprising a cable termination 1, a temperature sensor device 2 (SD) and a processor 3 (PRC). The monitoring system 100 is configured to detect anomalies in the cable termination 1.

Particularly, cable termination 1 can be a High Voltage (HV) termination or Medium Voltage (MV) termination. The following description refers to HV termination, but it is also appliable to termination operating in corresponding voltage higher than 5 KV.

The HV termination 1 comprises a base 4 (including metallic parts), an outer sheath 5 (made of dielectric material, such as fiberglass or other insulating materials), extending according to a longitudinal axis A1 and defining an inner region 6. The inner region 6 includes a cooling/insulating fluid 7 and a HV connection cable 8.

The HV termination 1 further comprises a top part 9 (including further metallic parts). The HV connection cable 8 extends into the inner region 6 along the longitudinal axis A1 and is configured to connect a portion of an external cable 10 (at the base 4) with a solid top connector 11, mounted at the top part 9. According to an example, a stress cone 17 is mounted on the HV connection cable 8.

The HV termination 1 can be of the type having a gaseous cooling/insulating fluid 7 (such as $SF_6$) or a liquid cooling/insulating fluid 7 (such as oil).

Considering the case in which the HV termination 1 is a liquid insulated termination, the monitoring system 100 is configured to detect one or more of the following anomaly conditions: bad bus-bar contact (resulting in abnormal hotspot at the top and possible damage for the electrical system to which the termination is connected); bad cable-to-termination interface (also resulting in hotspot at the bottom and likely damage for the electrical system); leakage of the cooling/insulating fluid.

Considering the case in which the HV termination 1 is a gas insulated termination, the monitoring system 100 is configured to detect a bad bus-bar contact condition through the detection of a hotspot at the top and/or bad cable-to-termination interface condition through the detection of a hotspot at the bottom.

As known to the skilled person, the bad bus-bar contact condition refers to the situation in which the conductor of the connection cable 8 does not contact suitably the solid top connector 11 and therefore it is an anomaly that can occur in the top part 9 of the HV termination.

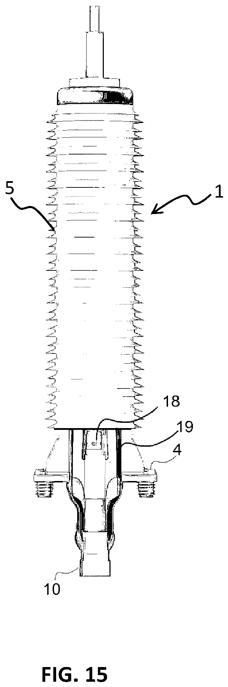

The bad cable-to-termination interface condition can occur typically in plug-in type terminations such as the one shown in FIG. 15. The plug-in termination 1 depicted in FIG. 15 further comprises a cable plug 18 and a termination connector 19. The bad cable-to-termination interface condition refers to the situation in which the termination connector 19 does not contact suitably the cable plug 18 and therefore it is an anomaly that can occur in the bottom portion of the HV termination, near the base 4. A termination analogous to the one shown in FIG. 15 is the termination model Click-Fit ® manufactured by the company Prysmian.

It is observed that both in case of HV termination 1 insulated with liquid and gas, the temperature increases with the height evaluated along the longitudinal axis A1 from the base 4 towards the top part 9.

If the cooling/insulating fluid 7 is a liquid, the heat generated into the connection cable 8 is removed and transferred outside by means of natural or forced convection. This leads the fluid near the connection cable 8 to move towards the top of the of the HV termination 1. For the same reason, the part of the fluid near the outer sheath 5 of the termination moves downwards. This convective motion leads the axial temperature profile to increase monotonically with the height.

Regarding a cooling/insulating fluid 7 made by gas, the mass density of the cooling/insulating gas 7 decreases with the temperature, therefore, when heat is generated within the connection cable 8 by the flowing current load, the gas stratifies and the axial temperature profile is monotonically increasing with the height.

The temperature sensor device 2 is placed near the HV termination 1 so as to measure temperatures of a plurality of HV termination points $S_1$- $S_M$ including points distributed at different heights, where the height is valuated in direction z parallel to the longitudinal axis A1. In some embodiments, temperature sensor device 2 is placed so as to measure temperature values of points corresponding to different sides around the HV termination 1.

The temperature sensor device 2 can be one of the following devices: a Distributed Temperature Sensing system (DTS) including an optical waveguide; thermal imaging sensor, infrared sensors providing thermal mapping by means, such as PIR (Passive Infrared) sensors.

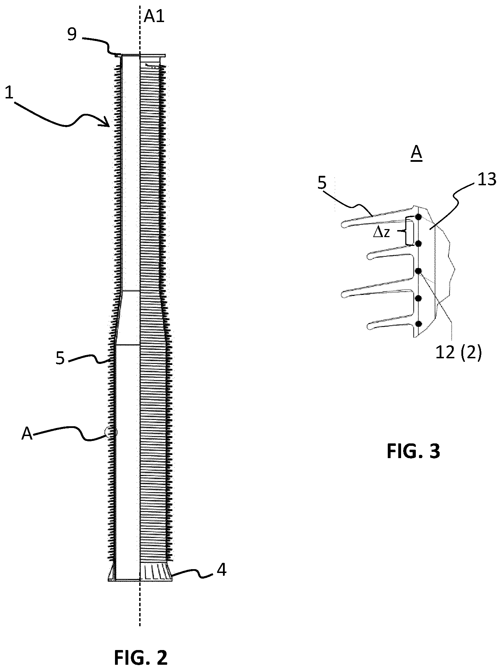

Particularly, as shown in the example in FIG. 3, the Distributed Temperature Sensing system includes an optical fiber 12 embedded into the outer sheath 5 of the HV termination 1. According to this particular embodiment, the optical fiber 12 is wrapped around an inner layer 13 of the outer sheath 5. The embedding of the optical fiber 12 can be performed in a step of the manufacturing of the HV termination 1. Particularly, the optical fiber 12 is wrapped, so as to form coils (coils 14 are shown in FIG.s 12-14) separated by an axial spacing $\Delta z$. As it will be better described later, different types of optical waveguides, other than the optical fibers, can be employed.

It is noticed that the temperature sensor device 2 can be also placed externally to the outer sheath 5. As an example, the optical fiber 12 is wound over the outer sheath 5 and the thermal imaging sensor or the infrared sensors are arranged outside the outer sheath 5.

The temperature sensor device 2 has a measurement spatial resolution $R_F$ that is chosen to be compatible with the magnitude of the anomaly/phenomenon that should be detected. For example, to detect an oil level decrease of $\Delta L_{oil}$, a spatial resolution of approximately 20% of $\Delta L_{oil}$ should be guaranteed.

As it will be better clarified later, the wrapped optical fiber 12 has an axial resolution Rz that is dependent on said axial spacing $\Delta z$ of the optical fiber coils 14.

The sensor 2 may include an acquisition circuit (not shown) for signal conditioning and conversion into digital data or such functions are at least partially performed by the processor 3.

According to an embodiment, the system 100 can also comprise a wind sensor 15 (WS) and/or a solar sensor 16 (SS), both configured to provide measured data to the processor 3. The wind sensor 15 is configured to provide data representing velocity of the wind investing the HV termination 1 and the solar sensor 16 is configured to provide data representing solar irradiation on the HV termination 1. In order to properly consider these effects, data covering at least the periods of solar irradiation or wind action should be stored. For example, the data acquired for a time period between 24 hours and 30 days should be stored.

The processor 3 (such as an example, a microprocessor, an ASIC- Application Specific Integrated Circuit - or a computer) can be placed in the area of the HV termination 1 or can be remote from it and is connected (with wires or in a wireless modality) to the sensor 2.

In accordance with an embodiment, the processor 3 is configured to perform both the acquisition functions (e.g. conditioning and A/D conversion of signals provided by the sensor 2) and data analysis with anomaly detection. According to another example, the data acquisition functions are performed by an electronic circuit placed in the area of the HV termination 1 while the analysis with the anomaly detection is performed by another processor device. Said processor device may be remotely placed with respect to the HV termination 1.

The acquisition functions are performed according to a preestablished time polling rate $t_{sr}$ so as the temperatures measuring times are separated by a "time distance" that, as an example, is lower than 0.25 h and extending over a measuring time interval greater than 24h. In some embodiments, the time distance is lower than 10 minutes and the measuring time interval is comprised between 7 days and 30 days.

Preferably, the sensor 2 and the acquisition circuit are so that a deviation between the actual temperature and the measured temperature at a certain measured point is lower than a preestablished maximum allowed measurement error $\Delta T_m$.

In an embodiment, the processor 3 includes at least one memory (not shown) configured to store the acquired data and a software application configured to perform digital processing of the acquired data to implement the anomaly detection.

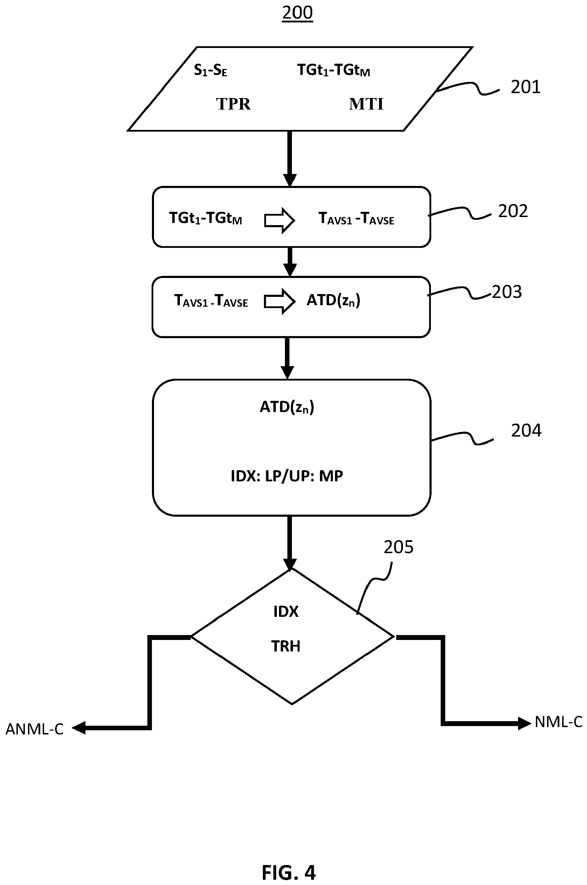

An anomaly detection method 200, implementable by the monitoring system 100, is described in the following with reference to FIG. 4.

Before proceeding with the description of the method, it is necessary to make some preliminary remarks.

The employed sensor 2, as arranged near the HV termination 1, defines a plurality of measuring points $S_1$-$S_E$ (FIG. 1) that are distributed from the base 4 to the top part 9 and for which the sensor 2 provides measured temperature values. Each measuring point $S_1$-$S_E$ is associated to a height evaluated along a z axis, parallel to the longitudinal axis A1. The number E and the positions of the measuring points $S_1$-$S_E$ depend on the employed particular sensor 2 (e.g. on its typology and its resolution). Such measuring points $S_1$-$S_E$ may be arranged parallel to the longitudinal axis A1 or may have different angular positions around the HV termination 1 (as in the case that a wound optical fiber 12 is employed to implement the sensor 2). Moreover, it is possible that for a given value $z_x$ a single measuring point is provided or that two or more measuring points having the same height $z_x$ are present. It is observed that the sensor 2 is configured in such a way that the processor 3 can associate each measuring points $S_1$-$S_E$ to the respective height $z_e$.

Moreover, according to an embodiment, the HV terminal 1 is functionally subdivided in different portions by defining a plurality of points of interest at different height values along the z axis (FIG. 1): a first point $P_H$, a second point $P_T$, a third point $P_B$ and fourth point $P_0$.

The first point $P_H$ corresponds to a first height value z= H, where H is the total height of the outer sheath 5. The second point $P_T$ corresponds to a second height value z= $Z_T$ selected under the height value H. An upper portion UP of the HV termination 1 can be defined between the first height value z= H and the second height value z= $Z_T$.

The third point $P_B$ corresponds to a third height value z= $Z_B$, lower than height value z= $Z_T$. The fourth point $P_0$ is placed at a fourth height value z=0, lower than z= $Z_T$ and corresponding to the base 4. A lower portion LP of the HV termination 1 can be defined between the third height value z= $Z_B$ and the fourth height value z= 0. Moreover, a middle portion MP of the HV termination 1 is defined between the second height value z= $Z_T$ and the third height value z= $Z_B$.

It is noticed that the points $P_H$, $P_T$, $P_B$ and $P_0$ above defined can be independently chosen from the measuring points $S_1$-$S_E$ and so points $P_H$, $P_T$, $P_B$ and $P_0$ may or not coincide with some of the measuring points $S_1$-$S_E$ for which the sensor 2 provides measured temperature values.

It is observed that the temperature of the lower portion LP is influenced by possible bad connection or, more generally, hot spots (i.e. particularly high temperature region) in said lower portion LP. Therefore, the choice of the third height value $Z_B$ depends on the specific HV termination 1 and it is limited to the area where the thermal influence of the metallic part near the base 4 is expected.

Moreover, it is expected that the temperature distribution in the middle portion MP cannot be used to detect hot spots in the metallic parts near the base 4 and at the top part 9 of the HV termination 1. For this reason, the choice of the second height value z= $Z_T$ depends on the specific design of the HV termination. It is observed that the middle portion MP shows a temperature behaviour relatively not influenced by the anomaly situations above listed.

Considering the case in which the HV termination 1 has a liquid cooling/insulating fluid 7, the following conditions can occur during the operation of the HV termination 1.

_Normal conditions._ Under load, a convective motion establishes inside the HV termination 1. Therefore, the distribution of the temperature in direction of the longitudinal axis A1 will be increasing with the height, except in the lower portion LP where the vicinity with metallic parts (base 4) can locally increase the temperature. The slope of the temperature distribution over the height will be quite constant and positive till reaching the level of the metallic parts of the top part 9, where the slope has a sudden further increase.

_Hot spot top condition._ Compared to the temperature distribution in normal conditions, the presence of a hot spot at the upper portion UP of the HV termination 1 leads to a drastic increase of the slope in proximity of the top part 9. Thus, compared to the normal conditions, the ratio between the temperature increase at the top part 9 and the temperature increase over the middle portion MV of the termination will be greater. It is observed that the hot spot top condition is also indicative of a bad bus-bar contact condition.

_Hot spot bottom condition._ Compared to the temperature distribution in normal conditions, the presence of a hot spot at the lower portion LP of the HV termination 1 (as the one of FIG. 15) leads to an appreciable increase of the temperature in proximity of the base 4 of Fig. 15. Thus, compared to the normal conditions, the ratio between the temperature decrease at the lower portion LP and the temperature increase over the middle portion MP of the termination will be greater. The hot spot bottom condition is also indicative of a bad cable-to-termination interface condition.

_Leakage of the cooling/insulating liquid 7._ The leakage of the cooling/insulating liquid 7 leads the liquid level to decrease and the air to fill the void left by the lack of liquid. Compared to the temperature distribution in normal conditions, the presence of air at the upper portion UP leads to a temperature decrease in this area and therefore to a negative slope in proximity of the top part 9.

Considering now the case in which the HV termination 1 has a gas cooling/insulating fluid 7, in a normal condition, under load, the convection is typically lower than in the case of HV termination 1 insulated with liquid. Moreover, the thermal conductivity of the most common gases used for this application is lower than that of the liquids. It follows that the temperature stratification in case of gas insulated termination will prevail on the thermal convection. Therefore, under normal condition, the temperature slope over the height of the HV termination will be roughly positive.

The hot spot top condition and the hot spot bottom condition for a HV termination 1 having gas cooling/insulating fluid 7 are analogous to that above described with reference to a liquid gas cooling/insulating fluid 7.

Referring to FIG. 4, the method 200 comprises a measuring step 201 wherein plurality of groups of temperature values $TGt_1$-$TGt_M$ are measured, by said temperature sensor 2. Each group of temperatures TGtj represents the temperature values $(T_1-T_E)_j$ assumed by the plurality of measuring points $S_1$-$S_E$, in a specific measuring time $t_j$ (where j is comprised in 1-M).

As above described, the measuring times are spaced by a time distance TPR (time polling rate) and the measures of the groups of temperature values $TGt_1$-$TGt_M$ are performed over a preestablished measuring time interval MTI. As already described, the time distance TPR can be lower than 0.25 h and extending over a measuring time interval MTI greater than 24h.

The plurality of groups of temperature values $TGt_1$-$TGt_M$ are acquired by the processor 3 that performs the following digital processing steps.

According to an example, in an average computing step 202, an average of temperature values of the plurality of groups $TGt_1$-$TGt_M$ over said measuring time interval MTI is performed, so providing a plurality of temperature average values $T_{AVS1}$-$T_{AVSE}$, wherein each value corresponds to a time average of the temperatures measured in a measuring point of the group $S_1$-$S_E$. As an example, the average temperature value $T_{AVSi}$ is the time average of the temperature values measured in the measuring point Si.

According to the described example, the plurality of temperature average values $T_{AVS1}$-$T_{AVSE}$ includes a number of values equal to the number of measuring points $S_1$-$S_E$ and therefore for each height value $z_x$ it is possible that two or more temperature average values $T_{AVi}$, $T_{AVj}$ are present.

In a distribution construction step 203, the processor 3 constructs from the plurality of temperature average values $T_{AVS1}$-$T_{AVSE}$ an axial temperature distribution ATD($z_n$), where $z_n$ is the height evaluated along the longitudinal axis A1 and expressed in a discrete form.

The axial temperature distribution ATD($z_n$) expresses average temperature values _versus_ height values $z_n$ according to a one-to-one correspondence, so as to provide a single temperature value for each value $z_n$.

The axial temperature distribution ATD($z_n$) is a

discrete function of the height $z_n$ for which any assumed value has been obtained (e.g. estimated) starting from the temperature average values $T_{AVS1}$-$T_{AVSE}$ and, as an example, according to at least one of the following construction methods: ordering and/or selecting the temperature values according to increasing height values, curve fitting, spatial average (wherein the estimated temperature value at a height $z_x$ is a further average of a group of the values measured around the height $z_x$).

It is observed that the number of temperature values expressed by the axial temperature distribution $ATD(z_n)$ can be greater or smaller than the number of values included in the group $T_{AVS1}$-$T_{AVSE}$ and the heights $z_n$ can be not coincident or not coincident with the heights of the measuring points $S_1$-$S_E$.

According to another embodiment, the average computing as described with reference to step 202 can be performed after having implemented the distribution construction step 203. In this case, each groups of temperature values $TGt_1$-$TGt_M$ is converted in a respective axial temperature distribution $ATD(z_n)t_1$-$ATD(z_n)t_M$ (as above described) and subsequently a time average is performed on the distributions $ATD(z)t_1$-$ATD(z)t_M$ to obtain the axial temperature distribution $ATD(z_n)$.

Such axial temperature distribution $ATD(z_n)$ is constructed so as to provide a form useful for the subsequent analysis.

It is noticed that, according to a particular embodiment, the axial temperature distribution $ATD(z)$ is constructed so as to provide values at the heights corresponding to the above mentioned points of interest: first point $P_H$ at z=H, second point $P_T$ at z= $Z_T$, third point $P_B$ at z= $Z_B$ and the fourth point $P_0$ at z=0.

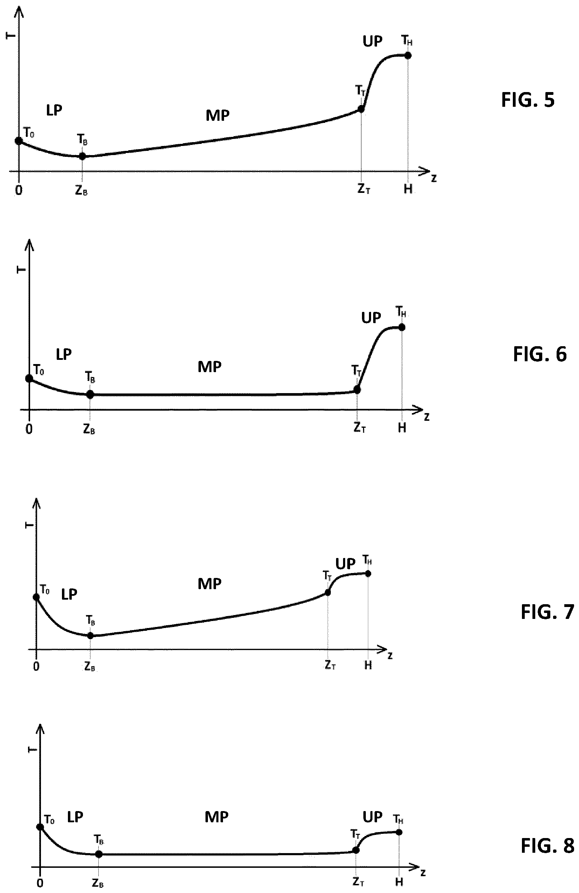

FIG. 5 shows an example of the axial temperature distribution $ATD(z_n)$ where the heights values 0, $Z_B$, $Z_T$ and H are shown to subdivide the distribution in three different trends (i.e. different portions) corresponding to the lower portion LP, middle portion MP and upper portion UP. It is observed that in FIG. 5 and in subsequent FIG.s 6-8 the axial temperature distribution $ATD(z_n)$ is represented as a continuous function, for the sake of clarity.

. It is noticed that the average computation over the measuring time interval MTI has a filtering effect, useful to smooth transitory and inertia behaviours of the cooling/insulating fluid 7, and allows reducing the effect of the wind or of the solar irradiation on the HV termination 1. Indeed, it is noticed that time constants associated to the anomalies evolution are driven from the thermal inertia of the components of HV termination and thus a time average (preferably, a long term time average) of the measured temperature enables to reduce the effects of fast phenomena depending on external factors (i.e. solar irradiation flick caused by clouds movement).In an analysing step 204, the processor 3 analyses the axial temperature distribution $ATD(z_n)$ by computing at least one index IDX.

The index IDX can be computed considering portions of the axial temperature distribution $ATD(z_n)$ comprised between different height ranges. As an example, derivatives (i.e. the slopes of the trends) of different distribution portions can be considered. According to an embodiment, the index IDX is computed on the basis of the distribution portion assumed by the axial temperature distribution $ATD(z_n)$ in the lower portion LP or in the upper portion UP in comparison with the distribution portion assumed in middle portion MP. In this case, the index IDX is given by a ratio between temperature increase shown in the lower portion LP or in the upper portion UP and the temperature increase shown in middle portion MP.

In a comparing step 205, the index IDX is compared with a threshold value TRH and based on said comparison a normal condition NML-C or an anomaly ANML-C condition is detected. Particularly, at least one of the following anomaly conditions can be detected: normal condition, bad bus-bar contact/hot spot top condition, bad cable-to-termination interface/hot spot bottom condition, leakage of cooling/insulating fluid condition.

It noticed that as a consequence of the specific considered temperature values at different height values, it is possible to differentiate a particular anomaly among the plurality of anomalies that potentially affect the HV terminal 1.

It is noticed that both the normal condition and the anomaly conditions can be affected by the day/night cycle under the effect of wind or solar irradiation. In particular, the axial temperature distribution $ATD(z_n)$ when the coldest temperature peak is reached should be considered for the analysis of possible warnings or faults in the anomaly detection. Moreover, the results of the analysis could be cross checked with measurements of the solar irradiation. The effect of the wind can be taken into account by neglecting the assessments when the wind velocity is greater than a predetermined threshold. Under the effect of great wind velocity, the temperature at the outer sheath 5 of the termination will tend to the environmental value.

Examples of calculation of the index IDX are described below. Particularly, depending on the anomaly to be detected different indexes are computed and different threshold are employed.

The hot spot top condition including also the bad bus-bar contact condition can be detected by considering the increase in the ratio between the temperature increase in the upper UP and the temperature increase over the middle portion MP. More specifically, a hot spot top condition is identified when the following first inequality is satisfied:

$$\frac{T_H - T_T}{T_T - T_B} > TR_{FT} \qquad (1)$$

Where:

- $T_H$ is the temperature value assumed by axial temperature distribution ATD(z) at the first height value z= H

- $T_T$ is the temperature value assumed by axial temperature distribution ATD(z) at the second height value z= $Z_T$,
- $T_B$ is the temperature value assumed by axial temperature distribution ATD(z) at the third height value z= $Z_B$.

Where $TR_1$ is a first predetermined threshold chosen to identify hot spot condition at the top of the HV termination 1.

The hot spot bottom condition can be detected by considering the increase in the ratio between the temperature increase in the lower portion LP and the temperature increase over the middle portion MP. More specifically, a hot spot bottom condition is identified when the following second inequality is satisfied:

$$\frac{T_0 - T_B}{T_T - T_B} > TR_2 \qquad (2)$$

Where, $T_B$ and $T_T$ have been already defined and $T_0$ is the temperature value assumed by the axial temperature distribution ATD(z) at the fourth height value z= 0. $TR_2$ is a second predetermined threshold chosen to identify hot spot condition at the bottom of the HV termination 1.

The above indicated first and second inequalities are valid for a HV termination 1 including a liquid cooling/insulting fluid 7 or a gas cooling/insulting fluid 7. The actual values of the heights Z= H, $Z_T$, $Z_B$, $z_{=0}$ and the of the thresholds $TR_1$, $TR_2$ depends on the specific termination and are normally different for liquid or gaseous cooling/insulting fluid 7.

As already described, FIG. 5 shows an example of the axial temperature distribution ATD($z_n$) over the HV termination 1 having a liquid cooling/insulating fluid 7 in condition of hot spot top.

FIG. 6 shows an example of the axial temperature distribution ATD($z_n$) over the HV termination 1 having a gaseous cooling/insulating fluid 7, in condition of hot spot top.

FIG. 7 shows an example of the axial temperature distribution ATD($z_n$) over the HV termination 1 having a liquid cooling/insulating fluid 7, in condition of hot spot bottom.

FIG. 8 shows an example of the axial temperature distribution ATD($z_n$) over the HV termination 1 having a gaseous cooling/insulating fluid 7, in condition of hot spot bottom.

With reference to the detection of the leakage of the cooling/insulating liquid 7, this anomaly is detected by considering the decrease in the ratio between the temperature increase in the upper portion UP and the temperature increase over the middle part MP. More specifically, a liquid leakage, is identified when the following third inequality is satisfied:

$$\frac{T_T - T_H}{T_T - T_B} > TR_3 \qquad (3)$$

Where, $TR_3$ is a third predetermined threshold to identify the alarm referring to a liquid leakage in the HV termination 1.

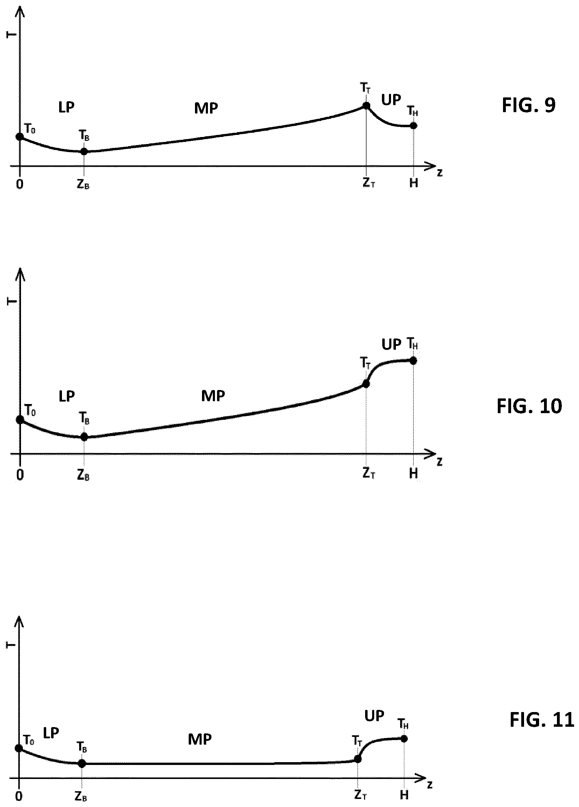

FIG. 9 shows an example of the axial temperature distribution ATD($z_n$) over the HV termination 1 having a liquid cooling/insulating fluid 7, in a liquid leakage condition.

In the cases in which none of the inequalities (1), (2) and (3) is satisfied, a normal condition is detected. FIG. 10 shows an example of the axial temperature distribution ATD(z) over the HV termination 1 having a liquid cooling/insulating fluid 7 and operating in a normal condition. FIG. 11 shows an example of the axial temperature distribution ATD(z) over the HV termination 1 having a gaseous cooling/insulating fluid 7 and operating in a normal condition.

<u>Embodiments of the sensor 2 comprising an optical waveguide.</u>

The following description refers to embodiments of the HV termination 1 in the case in that the sensor 2 is a Distributed Temperature Sensing system employing an optical wave guide, such as the optical fiber 12 or dielectric waveguides (e.g. made of plastic or glass). It is noticed that the embodiments described below can be used independently on some or all of the above described steps of the method 200 or can be employed to implement said method 200.

As already described with reference to the embodiments of FIG. 2 and FIG.3, the distributed temperature sensor 2 (DTS) comprises the optical fiber 12 wrapped around an inner layer 13 of the outer sheath 5 or wrapped outside the outer sheath 5: these embodiments allow not affecting the insulation performance of the HV termination 1.

The spatial resolution of the sensor 2 comprising the optical fiber 12 is typically between 5 mm and 2 m. The optical fiber 12 typically lies inside a plastic or metal tube (not shown) for its protection and it is characterized by a good flexibility.

The sensor 2 further includes an electromagnetic source (such as a LED) to transmit radiation into the optical fiber 12 and an electronic circuit configured to convert a received radiation into data representative of temperature values along the optical fiber 12. The optical fiber 12 has an input IN and an output OU.

In accordance with different ways of wrapping the fiber optic 12, the following embodiments can be identified: basic configuration, sectorial configuration and variable-density configuration. For all the configurations a single optical fiber 12 can be used, according to an example.

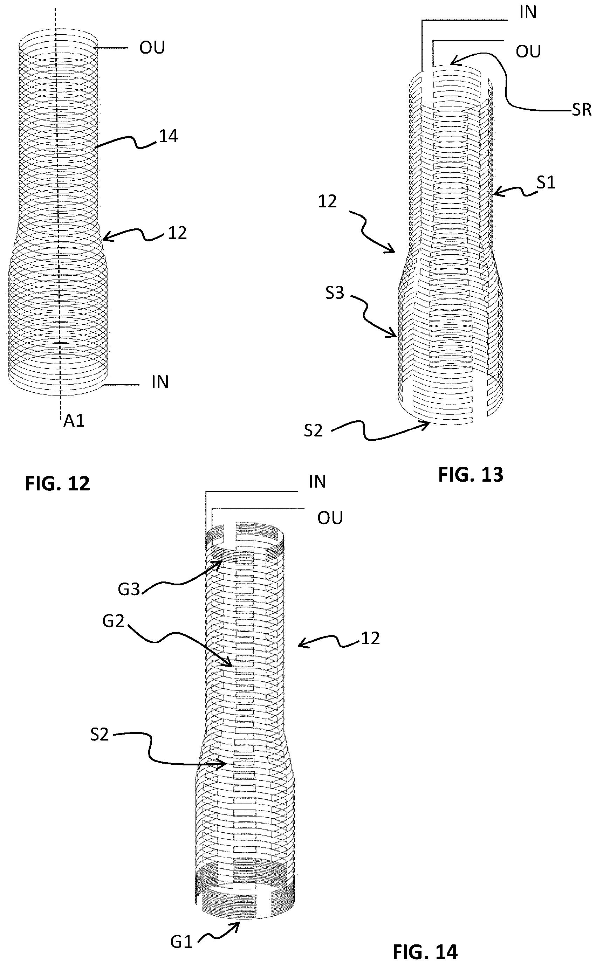

In the basic configuration (FIG. 12), the optical fiber 12 is wrapped helically so as to form coils 14 separated by a constant axial spacing $\Delta z$. The axial resolution $R_z$ of this solution can be calculated as follows:

$$R_z = \frac{R_F}{\pi D} \Delta z \qquad (4)$$

Where $D$ is the local diameter of the HV termination 1, $\Delta z$ is the already defined axial spacing between two consecutive coils 14, and $R_F$ is the spatial resolution of the optical fiber 12.

In accordance with the sectorial configuration (FIG. 13), a plurality of angular sectors S 1, S2, S3 ... SR of the outer sheath 5 are defined. Each angular sector S 1-SR extends along the longitudinal axis A1 of the HV termination (1). In each sector the corresponding portion of the optical fiber 12 forms a serpentine. Each serpentine of an angular sector is connected to another serpentine of another angular sector by an optical fiber segment. The sectorial configuration allows recognizing the effect of thermal phenomena occurring outside the HV termination 1. This is because typical external agents, like the solar irradiation or the wind, act directionally and therefore different conditions (anomalies or normal conditions) for different sector can be detected. For the sectorial configuration, the method 200 above described (when employed) can be integrated with measurements made through wind sensor 15 and/or solar sensor 16. In the embodiment of FIG. 13, the coils 14 in each angular sector S1-SR are spaced by a constant axial distance.

The variable-density configuration (FIG. 14) can be implemented into the basic configuration or the sectorial configuration described above. According to this embodiment, the optical fiber 12 is wrapped in order to form group of coils G1, G2 at different heights having different axial spacings, i.e. different coil densities. FIG. 4 shows the embodiment wherein, in each angular sector S1-SR, the corresponding serpentine forms the group of coils G1, G2, G3: the groups G1 and G3 have coil densities greater than that of group G2.

This variable-density configuration improves the spatial resolution in proximity of the more critical areas due to the fact that coil density of the optical fiber 12 can vary over the height of the HV termination 1. In example, the sectorial configuration can be integrated with an increase of the coil density near the base 4 (group G1) and the near the top part 9 (group G3).

In the case in which instead of the optical fiber 12 a dielectric waveguide is employed, the wrapping above described is implemented by printing or depositing on the internal layer 13 (or another intermediate layer) of the outer sheath 5 the dielectric waveguide. This solution is particularly advantageous when little curvatures should be obtained to ensure a high axial resolution. This solution is especially useful for the sectorial configuration and the variable density configuration.

## Claims

1. Cable termination anomaly detection method (200), comprising:

   placing at least a temperature sensor (2) near a cable termination (1) having a cooling/insulating fluid (7) so as to measure temperatures of a plurality of measuring points ($S_1$-$S_E$) including points distributed at different heights in direction of a longitudinal axis (A1) of the cable termination (1);
   measuring (201) by said temperature sensor (2), at different measuring times and in a measuring time interval (MTI), a plurality of groups of temperature values ($TGt_1$-$TGt_M$), where each group represents temperatures assumed by the plurality of said measuring points ($S_1$-$S_E$) in a corresponding measuring time;
   acquiring the plurality of groups of temperature values ($TGt_1$-$TGt_M$) and performing the following digital processing:

   constructing (203) an axial temperature distribution ($ATD(z_n)$) expressing a one-to-one correspondence between estimated temperature values obtained from the plurality of groups of temperature values ($TGt_1$-$TGt_M$) and height values along the longitudinal axis (A1);
   performing an average so as each estimated temperature value of the axial temperature distribution ($ATD(z_n)$) is the result of a time average (202), over said measuring time interval (MTI), of temperatures obtained from said plurality of groups of temperature values ($TGt_1$-$TGt_M$);
   computing (204) at least one index (IDX) based on portions of the axial temperature distribution ($ATD(z_n)$) comprised between different height ranges;
   comparing (205) said at least one index (IDX) with a respective threshold value (TRH) and detecting at least one of the following operating conditions of the cable termination (1): normal condition, bad busbar contact/hot spot top condition, bad cable-to-termination interface/hot spot bottom condition, leakage of cooling/insulating fluid condition.

2. The method of claim 1, wherein:

   Said time average (202) is performed averaging over said measuring time interval (MTI) the plurality of groups of temperature values ($TGt_1$-$TGt_M$) obtaining a plurality of temperature average values ($T_{AVS1}$-$T_{AVSE}$); each temperature average value corresponding to a time average of temperatures measured in a measuring point ($S_1$-$S_E$); said axial temperature distribution ($ATD(z_n)$) is obtained implementing said least one construction method to the plurality of groups of temperature values ($TGt_1$-$TGt_M$) obtaining a plurality of temperature average values ($T_{AVS1}$-$T_{AVSE}$).

3. The method of claim 1, further comprising:

constructing a plurality of further axial temperature distributions each associated to one group of the plurality of groups of temperature values ($TGt_1$-$TGt_M$) by implementing said least one construction method; performing the time average, over said measuring time interval (MTI), of the plurality of further axial distributions obtaining said axial distribution ($ADT(z_n)$).

4. The method of claim 1, wherein: computing (204) said least one index (IDX) comprises: considering a portion of the axial temperature distribution ($ATD(z_n)$) assumed in a lower portion/upper portion (LP; UP) of the termination (1) in comparison with another portion of the axial temperature distribution ($ATD(z_n)$) assumed in a middle portion (MP) of the termination (1).

5. The method of claim 1, wherein constructing (203) an axial temperature distribution ($ATD(z_n)$) is performed according at least one of the following construction methods: ordering temperatures according increasing height values, curve fitting, selecting temperatures; performing spatial average of temperatures

6. The method (200) of claim 4, wherein computing (204) at least one index (IDX) comprises at least one of the following selections and computations:

selecting from the axial temperature distribution ($ATD(z)$) a first average temperature ($T_H$) and a second average temperature ($T_T$) associated to a first height value (z=H) and second height value ($Z_T$) defining the upper portion (UP); selecting from the axial temperature distribution ($ATD(z)$) a third average temperature ($T_B$) and a fourth average temperature ($T_0$) associated to third height value ($Z_B$) and fourth height value (z=0) defining the lower portion (LP); the second height value ($Z_T$) and the third height value ($Z_B$) defining the middle portion (MP); computing a first index as a first ratio between a difference between the first average temperature ($T_H$) and the second average temperature ($T_T$) and a difference between the second average temperature ($T_T$) and the third average temperature ($T_B$); computing a second index as a second ratio between a difference between the fourth average temperature ($T_0$) and the third average temperature ($T_B$) and a difference between the second average temperature ($T_T$) and the third average temperature ($T_B$); computing a third index as a third ratio between a difference between the second average temperature ($T_T$) and the first average temperature ($T_H$) and a difference between the second average temperature ($T_T$) and the third average temperature ($T_B$); wherein

- the first index is indicative of the bad bus-bar contact /hot spot top condition;
- the second index is indicative of a bad cable-to-termination interface /hot spot bottom condition;
- the third index is indicative of leakage of said cooling/insulating fluid (7) under a liquid form.

7. The method of claim 6, wherein comparing (205 ) said at least one index (IDX) with a respective threshold value (TRH) comprises:

defining a first threshold value and detecting the bad bus-bar/hot spot top condition when said first index is greater than the first threshold; defining a second threshold value and detecting the bad cable-to-termination interface/hot spot bottom condition when said second index is greater than the second threshold; defining a third threshold value and detecting the leakage of cooling/insulating fluid condition when said third index is greater than the third threshold, detecting the normal condition when none of the above conditions is detected.

8. The method (200) of claim 1, wherein:

said cable termination (1) comprises an outer sheath (5) surrounding the insulating/cooling fluid (7); placing at least a temperature sensor (2) near the cable termination (1) comprises:

providing a Distributed Temperature Sensing system including an optical waveguide (12) of one of the following typologies: optical fiber (12); dielectric waveguide; and performing one of the following operations: embedding said at least temperature sensor (2) in the outer sheath (5) of the cable termination (1); wrapping the optical waveguide around an internal layer (13) of the outer sheath (5); wrapping the optical waveguide on an external surface of the outer sheath (5); wrapping by printing/depositing said optical waveguide on the internal layer (13) of the outer sheath (5).

9. The method of claim 8, wherein wrapping the optical waveguide includes:
forming coils (14) separated by an axial spacing; an axial resolution of the distributed temperature sensor (2) including the optical waveguide being dependent on said axial spacing.

10. The method of claim 9, further including:
wrapping the optical waveguide forming a plurality of group of coils (G1, G2) having different heights and comprising a first group of coils (G1) including coils (14) with a first coil density and a second group of coils (G2) with a second coil density, different from the first coil density.

11. The method of claim 8, further including:

defining different angular sectors (S1-SR) of the outer sheath (5), each sector extending along said longitudinal axis (A1) of the cable termination (1);
and wherein
wrapping the optical waveguide comprises forming a plurality of serpentines each in a separated angular sector (S1-SF); each serpentine of an angular sector being connected to another serpentine of another angular sector by an optical fiber segment.

12. A cable termination anomaly detection system (100) comprising:

- a cable termination (1) comprising: an outer sheath (5) extending according to a longitudinal axis (A1) and a cooling/insulating fluid (7) housed in said outer sheath (5);
- at least a temperature sensor (2) placed near a cable termination (1) and configured to measure temperatures of a plurality of measuring points $(S_1-S_E)$ including points distributed at different heights in direction of a longitudinal axis (A1) of the cable termination (1);
- a processor (3) connected to said at least one temperature sensor (2) so as to acquire at different measuring times a plurality of groups of temperature values $(TGt_1-TGt_M)$, where each group represents temperatures assumed by the plurality of said measuring points $(S_1-S_E)$ in a corresponding measuring time over a measuring time interval (MTI);

wherein said processor (3) in configured to perform the following digital processing:

constructing (203) an axial temperature distribution $(ATD(z_n))$ expressing a one-to-one correspondence between estimated temperature values obtained from the plurality of groups of temperature values $(TGt_1-TGt_M)$ and height values along the longitudinal axis (A1);
performing an average so as each estimated temperature value of the axial temperature distribution $(ATD(z_n))$ is the result of a time average (202), over said measuring time interval (MTI), of temperatures obtained from said plurality of groups of temperature values $(TGt_1-TGt_M)$;
computing (204) at least one index (IDX) based on portions of the axial temperature distribution $(ATD(z_n))$ comprised between different height ranges;
comparing (205) said at least one index (IDX) with a respective threshold value (TRH) and detecting at least one of the following operating conditions of the cable termination (1): normal condition, bad bus-bar contact/hot spot top condition, bad cable-to-termination interface/hot spot bottom condition, leakage of cooling/insulating fluid condition.

13. Cable termination monitoring system (100), comprising:

- a cable termination (1) comprising an outer sheath (5) extending according to a longitudinal axis (A1) and a cooling/insulating fluid (7) housed in said outer sheath (5);
- a distributed temperature sensor (2) comprising an optical waveguide (12) and configured to measure temperatures of a plurality of measuring points $(P_0-P_H)$ distributed at different heights in direction of the longitudinal axis (A1);
- wherein said optical waveguide (12) is placed around an outer/inner layer of the outer sheath (5) so as to form coils (14) with an axial spacing; an axial resolution of the distributed temperature sensor (2) depending on said axial spacing.

14. The monitoring system (100) of claim 13, wherein:
the optical waveguide (12) forms a plurality of group of coils (G1, G2) having different heights and comprising a first group of coils (G1) with a first coil density and a second group of coils (G2) with a second coil density, different from the first coil density.

15. The monitoring system (100) of claim 14, wherein:
the optical waveguide (12) is placed so as to form a plurality of serpentines each serpentine lying in a separated angular sector (S1-SF) of the outer sheath (5); each angular sector extending along said longitudinal axis (A1) of the cable termination (1).

$P_H; z=H$

$P_T; z= Z_T$

$P_J$

$P_B; z= Z_B$

$P_0; z=0$

UP

MP

LP

A1

9

11

6

1

7

8

17

5

4

10

$S_1-S_E$

SD

2

15

16

WS

SS

PRC

3

100

**FIG. 1**

A1

9

1

5

A

4

**FIG. 2**

A

5

13

Δz

12 (2)

**FIG. 3**

<u>200</u>

FIG. 4

FIG. 5

FIG. 6

FIG. 7

FIG. 8

FIG. 9

FIG. 10

FIG. 11

OU — 14 — 12 — IN — A1

**FIG. 12**

IN — OU — SR — S1 — 12 — S3 — S2

**FIG. 13**

IN — OU — G3 — G2 — 12 — S2 — G1

**FIG. 14**

**FIG. 15**

Europäisches
Patentamt

European
Patent Office

Office européen
des brevets

# EUROPEAN SEARCH REPORT

**Application Number**

EP 24 19 1425

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 133 624 B2 (JAHN CHRISTIAN [DE]; OBERMEYER SEBASTIAN [DE]; INNOGY SE [DE]) 28 September 2021 (2021-09-28) | 13-15 | INV.<br>G01K3/14<br>G01K11/32 |
| A | * abstract; figures 5,6 *<br>* column 2, line 12 - column 4, line 40 *<br>* column 5, lines 33-37 *<br>* column 10, line 33 - column 11, line 27 * | 1-12 | |
| A | EP 3 706 145 A1 (SIEMENS AG [DE]) 9 September 2020 (2020-09-09)<br>* abstract; figures *<br>* paragraphs [0004] - [0006], [0020], [0021] * | 1-15 | |
| A | US 2015/285692 A1 (HASHIMOTO EIJI [JP] ET AL) 8 October 2015 (2015-10-08)<br>* abstract; figure 1 *<br>* paragraphs [0016], [0038], [0039] * | 1-15 | |
| A | DE 199 21 256 A1 (GESO GES FUER SENSORIK GEOTECH [DE]) 9 November 2000 (2000-11-09)<br>* abstract *<br>* page 3, line 64 - page 4, line 15 * | 1-15 | **TECHNICAL FIELDS SEARCHED (IPC)**<br><br>G01K<br>G01M<br>H01B<br>H01R |
| A | JP H09 101210 A (ISHIKAWAJIMA HARIMA HEAVY IND) 15 April 1997 (1997-04-15)<br>* abstract; figures 1,2,6 *<br>* paragraphs [0013], [0020] - [0023] * | 13-15 | |

The present search report has been drawn up for all claims

| Place of search | Date of completion of the search | Examiner |
|---|---|---|
| The Hague | 19 December 2024 | de Bakker, Michiel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

**Application Number**

EP 24 19 1425

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☒ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

The Search Division considers that the present European patent application does not comply with the requirements of unity of invention and relates to several inventions or groups of inventions, namely:

1. claims: 1-15

   All searched claims

1.1. claims: 1-12

   cable termination anomaly detection by computing an index

1.2. claims: 13-15

   cable termination monitoring system comprising an optical waveguide placed so as to form coils

   - - -

Please note that all inventions mentioned under item 1, although not necessarily linked by a common inventive concept, could be searched without effort justifying an additional fee.

EP 4 517 284 A1

## ANNEX TO THE EUROPEAN SEARCH REPORT
## ON EUROPEAN PATENT APPLICATION NO.

EP 24 19 1425

This annex lists the patent family members relating to the patent documents cited in the above-mentioned European search report.
The members are as contained in the European Patent Office EDP file on
The European Patent Office is in no way liable for these particulars which are merely given for the purpose of information.

19-12-2024

| Patent document cited in search report | | Publication date | Patent family member(s) | | Publication date |
|---|---|---|---|---|---|
| US 11133624 | B2 | 28-09-2021 | DE 102017131128 | A1 | 27-06-2019 |
| | | | EP 3729032 | A1 | 28-10-2020 |
| | | | ES 2896015 | T3 | 23-02-2022 |
| | | | US 2020321735 | A1 | 08-10-2020 |
| | | | WO 2019121538 | A1 | 27-06-2019 |
| EP 3706145 | A1 | 09-09-2020 | DK 3706145 | T3 | 07-08-2023 |
| | | | EP 3706145 | A1 | 09-09-2020 |
| US 2015285692 | A1 | 08-10-2015 | CN 104335019 | A | 04-02-2015 |
| | | | EP 2860502 | A1 | 15-04-2015 |
| | | | JP 5932996 | B2 | 08-06-2016 |
| | | | JP WO2013183126 | A1 | 21-01-2016 |
| | | | KR 20150017366 | A | 16-02-2015 |
| | | | US 2015285692 | A1 | 08-10-2015 |
| | | | WO 2013183126 | A1 | 12-12-2013 |
| DE 19921256 | A1 | 09-11-2000 | NONE | | |
| JP H09101210 | A | 15-04-1997 | NONE | | |

EPO FORM P0459

For more details about this annex : see Official Journal of the European Patent Office, No. 12/82

24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110153232 A

**Non-patent literature cited in the description**

- Integral sensing of HV cable joints - Monitor operation and predict failures early. *10th International Conference on Insulated Power Cables*, 2019